# EUROPEAN PATENT APPLICATION

(11) **EP 2 947 630 A1**
(43) Date of publication of application: **25.11.2015**
(21) Application number: 14169604.7
(22) Date of filing: 23.05.2014
(51) Int. Cl.: G06T 9/40

(54) **Method for compressing coordinate data**

(71) Applicant: My Virtual Reality Software AS, 0680 Oslo (NO)
(72) Inventor: Kristiansen, Stig Ronald, N-0969 Oslo (NO)
(74) Representative: Kaminski Harmann

(57) **Abstract**

The invention relates to a method for compressing a set of coordinate data (20), in particular a point cloud, comprising a multitude of data points, each data point having a coordinate set comprising n coordinates, where n is the number of dimensions of the coordinate data (20), the method comprising calculating an n-dimensional enclosing volume that encloses all of the data points; uniformly partitioning the enclosing volume into sub-volumes, thereby performing a first partitioning step, in which the enclosing volume is partitioned into 2*ⁿ* sub-volumes, and one or more further partitioning steps, in each of which each of those sub-volumes that have been created in the previous partitioning step and that enclose at least one data point is partitioned into 2*ⁿ* smaller sub-volumes; and storing point data of at least one data point in a data storage system, wherein the point data for each data point comprises an identifier of a sub-volume that encloses the respective data point, and relative point data of the respective data point, the relative point data being referenced to the respective sub-volume. The invention furthermore pertains to a server computer (40), to a computer system comprising a server computer (40) and a mobile device (30), and to a computer programme product for execution of said method.

## Description

The present invention pertains to a method for compressing a set of coordinate data. In particular, it pertains to a method for reducing the size of the information needed to describe a collection of coordinates in a multidimensional space. The invention allows a variable trade-off between the precision and the resulting size of the compressed data, so that the compression rate can be adapted to a required displaying precision. The method may be applied to coordinates in spaces with any number of dimensions, e. g. to two- or three-dimensional coordinates.

A typical implementation of the present invention is the compression of data needed for a visual representation of a point cloud, particularly originating from Lidar scanning, in order to transfer the data more quickly over a network to a remote device. One main problem with Lidar scanning is the enormous amount of data which is needed to store or transfer the created point cloud. This makes network transfers of point cloud data troublesome.

The present invention allows for a method to greatly reduce the amount of data needed to describe a point cloud. Furthermore it allows for a trade-off between loss in precision or perceived quality and the data size. This loss in precision is usually not a problem for visualization purpose as long as the error ratio is kept small enough. For example: if the error ratio is typically smaller than the size of a screen pixel it will not even be visible on the screen.

When displaying large data sets, particularly in a mobile device, the memory of the device or the transfer speed of the data can become limiting factors. If the memory of the device is too small, not all of the data can be stored in the memory at the same time. If the network for the provision of the data is too slow, for instance in the case of a slow wireless internet connection, it may take too long to transfer all of the data over the network for an efficient use of the data. Therefore, often it is advantageous to compress the data so that the amount of data that needs to be transferred and/or stored in the memory of the device is reduced. This is especially important for mobile devices, which generally have particularly limited memory capacities.

Preferably, the amount of transferred data is as small as possible, especially when the data is transferred over a slow network connection or to a client device having limited computing or memory resources - as it is the case in many mobile devices such as Smartphones.

It is straight forward to implement an adjustment of the compression ratio either with respect to the maximum size of the data or to the maximum allowed error. A simple solution could be to just store the coordinates of all the points of a point cloud as scaled integers. However, since most computers are limited to operating on integers with fixed sizes, for example 32 or 64 bits, disadvantageously the compression rate is not adjustable.

Common compression methods usually allow obtaining a fixed compression ratio. Examples for algorithms utilized by such methods with fixed compression ratios are the Lempel-Ziv-Welch algorithm ("LZW"), the deflate algorithm and the Lempel-Ziv-Markov chain algorithm ("LZMA"). The compression ratio of course depends on the entropy of the data but is typically rather low compared to raw binary data.

It is therefore an object of the present invention to provide an enhanced method for compressing a set of coordinate data.

It is a further object of the invention to provide such a method that allows obtaining higher compression ratios with a lower precision loss, particularly with a precision loss that under typical circumstances is not visible to the naked eye.

It is a particular object of the invention to provide such a method wherein a ratio of compression versus quality loss is flexible and adjustable to fit the need, e. g. a required displaying precision or a required compression rate.

It is a further object of the invention to provide such a method, wherein the compressed data generated by this invention fits into a binary packed file.

It is a further object of the present invention to provide a method for transferring the compressed coordinate data to a mobile device and displaying a graphical representation thereof on a display of the mobile device.

It is a particular object of the invention to provide such a method that reduces the amount of data that has to be stored on a mobile device and reduces data traffic in a network, particularly reducing the amount of data that is downloaded from a server.

It is another object of the invention to provide a server computer, a computer system and a computer programme product for execution of said method.

At least one of these objects is achieved by the method according to claim 1, the server computer according to claim 10, the computer system according to claim 14, the computer programme product according to claim 15 and/or the dependent claims of the present invention.

A method for compressing a set of coordinate data comprising a multitude of data points, each data point having a coordinate set comprising *n* coordinates, where *n* is the number of dimensions of the coordinate data, according to the invention comprises
- calculating an *n*-dimensional enclosing volume that encloses all of the data points;
- uniformly partitioning the enclosing volume into sub-volumes, thereby performing
   ■ a first partitioning step, in which the enclosing volume is partitioned into 2*ⁿ* sub-volumes, and
   ■ one or more further partitioning steps, in each of which each of those sub-volumes that have been created in the previous partitioning step and that enclose at least one data point is partitioned into 2*ⁿ* smaller sub-volumes; and
- storing point data of at least one data point in a data storage system, wherein the point data for each data point comprises
   ■ an identifier of a sub-volume that encloses the respective data point, and
   ■ relative point data of the respective data point, the relative point data being referenced to the respective sub-volume.

In one embodiment, the method comprises providing the processed point data to an external device, particularly a mobile device, and displaying a graphical representation of the point data, in particular a point cloud, on a displaying means of the external device, particularly wherein the number of further partitioning steps is calculated based on a resolution of the displaying means.

In another embodiment, the method comprises calculating the number of further partitioning steps based on a required displaying precision of the coordinate data, particularly wherein the required displaying precision is pre-defined, in particular through a selection by a user, and/or determined automatically, in particular depending on a pre-defined quality factor or on a resolution of a display on which a graphical representation of the point data is to be displayed.

In another embodiment, the method comprises selecting a subset from the number of sub-volumes, each sub-volume of the subset enclosing at least one data point, wherein all data points for which point data is stored are enclosed in a sub-volume of the subset, and the point data of each data point comprises an identifier of a sub-volume of the subset and relative point data which is referenced to the respective sub-volume of the subset. Preferably, the subset is selected from those sub-volumes that have been created in a last partitioning step, and/or from the number of the smallest sub-volumes, in particular wherein selecting the subset from the number of the smallest sub-volumes comprises selecting exactly those sub-volumes that enclose at least one data point.

In one embodiment of this method, storing point data is performed for a multitude of sub-volumes of the subset, in particular for every sub-volume of the subset; and/or comprises storing point data of at least one data point that is enclosed by the respective sub-volume, in particular of all data points that are enclosed by the respective sub-volume.

In a further embodiment, storing point data comprises storing further information about the data point, such as a unique identifier, a colour, a lidar classification or other custom data.

In another embodiment of this method, a reference point is defined for each sub-volume of the subset, wherein the reference points have the same coordinates in their respective sub-volume, particularly being centre or corner points of their respective sub-volumes, and the relative point data of the respective data point is referenced to the reference point.

In a further embodiment of this method, uniformly partitioning the enclosing volume comprises assigning nodes of a data tree-structure to the sub-volumes, wherein a number of children for each node in the tree equals 2*ⁿ*, selecting a subset comprises assigning leaf nodes to the smallest sub-volumes enclosing at least one data point, and storing point data comprises determining for each data point which leaf node it belongs to and traversing the tree structure downwards from a top node along each sub-tree that has at least one leaf node, wherein when reaching a leaf node, coordinates relative to the corresponding sub-volume are stored, in particular wherein for each step down, it is stored which child node contains data so that the traversed order is reproducible for decompression.

In one embodiment of the method according to the invention, maximum and minimum values of the coordinates of the relative point data that is referenced to a sub-volume are scaled to the size of the respective sub-volume, particularly wherein the coordinates are stored as integer values.

In another embodiment of the method according to the invention, the enclosing volume is a minimum enclosing volume, and/or calculating the enclosing volume comprises determining for all the coordinates in the coordinate data the numerical minimum and maximum values for each dimension.

A server computer which is adapted for processing coordinate data comprising a multitude of data points, each data point having a coordinate set comprising *n* coordinates, where *n* is the number of dimensions of the coordinate data, according to the invention comprises
- a calculation unit adapted for generating point data from the coordinate data;
- a data storage system adapted for storing the point data in a tree structure; and
- provision means adapted for providing the point data to a mobile device, particularly via an internet or intranet connection and/or a public or private cloud.

According to the invention, the calculation unit comprises a data processing algorithm adapted for performing a data compressing process for generating the point data from the coordinate data, wherein the data compressing process comprises
- calculating an *n*-dimensional enclosing volume that encloses all of the data points;
- uniformly partitioning the enclosing volume into sub-volumes, thereby performing
   ■ a first partitioning step, in which the enclosing volume is partitioned into 2*ⁿ* sub-volumes, and
   ■ one or more further partitioning steps, in each of which each of those sub-volumes that have been created in the previous partitioning step and that enclose at least one data point is partitioned into 2*ⁿ* smaller sub-volumes; and
- storing point data of at least one data point in the data storage system, wherein the point data for each data point comprises
   ■ an identifier of a sub-volume that encloses the respective data point, and
   ■ relative point data of the respective data point, the relative point data being referenced to the respective sub-volume.

In one embodiment of the server computer, the data compressing process comprises selecting a subset from the number of sub-volumes, each sub-volume of the subset enclosing at least one data point, wherein all data points for which point data is stored are enclosed in a sub-volume of the subset and the point data of each data point comprises an identifier of a sub-volume of the subset and relative point data which is referenced to the respective sub-volume of the subset.

In another embodiment of the server computer, the number of further partitioning steps depends on a needed displaying precision of the coordinate data. Particularly, the needed displaying precision is
- subject to a resolution of a displaying means of the external device,
- pre-defined, in particular through a selection by a user, and/or
- determined automatically, in particular depending on a pre-defined quality factor.

In a further embodiment of the server computer,
- uniformly partitioning the enclosing volume comprises assigning nodes of the data tree-structure to the sub-volumes, wherein a number of children for each node in the tree equals 2ⁿ;
- selecting a subset comprises assigning leaf nodes to the smallest sub-volumes enclosing at least one data point; and
- storing compressed data comprises determining for each data point which leaf node it belongs to, and □ traversing the tree structure downwards from a top node along each sub-tree that has at least one leaf node, wherein when reaching a leaf node, coordinates relative to the corresponding sub-volume are stored, in particular wherein for each step down, it is stored which child node contains data so that the traversed order is reproducible for decompression.

A computer system according to the invention comprises a server computer and a mobile device, the system being adapted for processing and displaying coordinate data comprising a multitude of data points, each data point having a coordinate set comprising *n* coordinates, where *n* is the number of dimensions of the coordinate data,
- the server computer comprising
   ■ a calculation unit adapted for generating point data from the coordinate data;
   ■ a data storage system adapted for storing the point data in a tree structure; and
   ■ provision means adapted for providing the point data to the mobile device, particularly via an internet or intranet connection and/or a public or private cloud,
- the mobile device comprising a displaying means adapted for displaying a graphical representation of the point data, in particular a point cloud.

According to the invention, the calculation unit comprises a data processing algorithm adapted for performing a data compressing process for generating the point data from the coordinate data, wherein the data compressing process comprises
- calculating an *n*-dimensional enclosing volume that encloses all of the data points;
- uniformly partitioning the enclosing volume into sub-volumes, thereby performing
   ■ a first partitioning step, in which the enclosing volume is partitioned into 2*ⁿ* sub-volumes, and
   ■ one or more further partitioning steps, in each of which each of those sub-volumes that have been created in the previous partitioning step and that enclose at least one data point is partitioned into 2*ⁿ* smaller sub-volumes, wherein the number of further partitioning steps depends on a resolution of the displaying means; and
- storing point data of at least one data point in the data storage system, wherein the point data for each data point comprises
   ■ an identifier of a sub-volume that encloses the respective data point, and
   ■ relative point data of the respective data point, the relative point data being referenced to the respective sub-volume.

According to the invention, a computer programme product, comprises programme code which is stored on a machine-readable medium, or is embodied by an electromagnetic wave comprising a programme code segment, and has computer-executable instructions for performing, in particular when run on calculation means of a computer system according to the invention, the following steps of the method according to the invention:
- calculating an *n*-dimensional enclosing volume that encloses all of the data points;
- uniformly partitioning the enclosing volume into sub-volumes, thereby performing
   ■ a first partitioning step, in which the enclosing volume is partitioned into 2*ⁿ* sub-volumes, and
   ■ one or more further partitioning steps, in each of which each of those sub-volumes that have been created in the previous partitioning step and that enclose at least one data point is partitioned into 2*ⁿ* smaller sub-volumes; and
- storing point data of at least one data point in a data storage system, wherein the point data for each data point comprises
   ■ an identifier of a sub-volume that encloses the respective data point, and
   ■ relative point data of the respective data point, the relative point data being referenced to the respective sub-volume.

The invention in the following will be described in detail by referring to exemplary embodiments that are accompanied by figures, in which:
- Fig. 1: shows an exemplary embodiment of a computer system according to the invention, comprising a hand-held mobile device and a server computer;
- Fig. 2: shows a flow chart illustrating a first exemplary embodiment of the method according to the invention;
- Fig. 3: shows a flow chart illustrating a second exemplary embodiment of the method according to the invention;
- Figs. 4a-d: show a number of coordinates in a two-dimensional plane, a minimum enclosing rectangle being partitioned into sub-volumes, those sub-volumes enclosing at least one coordinate being highlighted; Figs. 5a-b show a first example of creating relative point data having a coordinate set that is referenced to the respective sub-volume;
- Figs. 6a-b: show a second example of creating relative point data having a coordinate set that is referenced to the respective sub-volume;
- Figs. 7a-c: show a number of coordinates in a three-dimensional space and a minimum enclosing cube being partitioned into sub-volumes; and
- Figs. 8a-b: show a data tree structure for coordinates in a three-dimensional space.

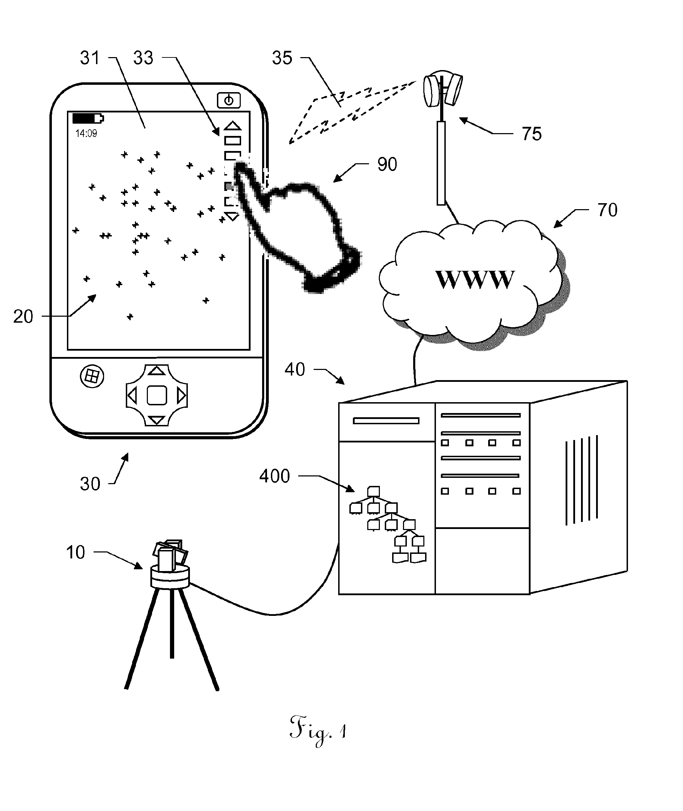

In Figure 1 an exemplary embodiment of a computer system according to the invention for execution of the method according to the invention is depicted.

The depicted server-client-system comprises an exemplary embodiment of a server computer 40 according to the invention and a mobile device 30. The server computer 40 is adapted to provide data files comprising compressed coordinate data to the mobile device 30. The mobile device 30 is adapted to receive the data files to decompress the received coordinate data and to display a graphical representation of the coordinate data 20 on its display 31. For providing and receiving the data, the depicted server computer 40 and the mobile device 30 have communication means for establishing a connection via the internet 70. For instance, the mobile device 30 can establish the connection to the remote server 40 by means of a wireless connection 35 to a cell phone base station 75.

Original coordinate data is provided to the server computer 40 by a laser scanner 10, e. g. being adapted to scan surfaces by means of LiDAR scanning, or from external sources. The coordinate data may be two- or three-dimensional and comprises a multitude of data points, i.e. coordinate sets comprising two (X, Y) or three coordinates (X, Y, Z).

The server computer 40 is adapted to compress the original coordinate data as processed data according to the method described further below, particularly on request from the mobile device 30, to store the processed data as nodes of a hierarchical file system 400, particularly a quadtree or an octree, and to provide the requested data to the mobile device 30.

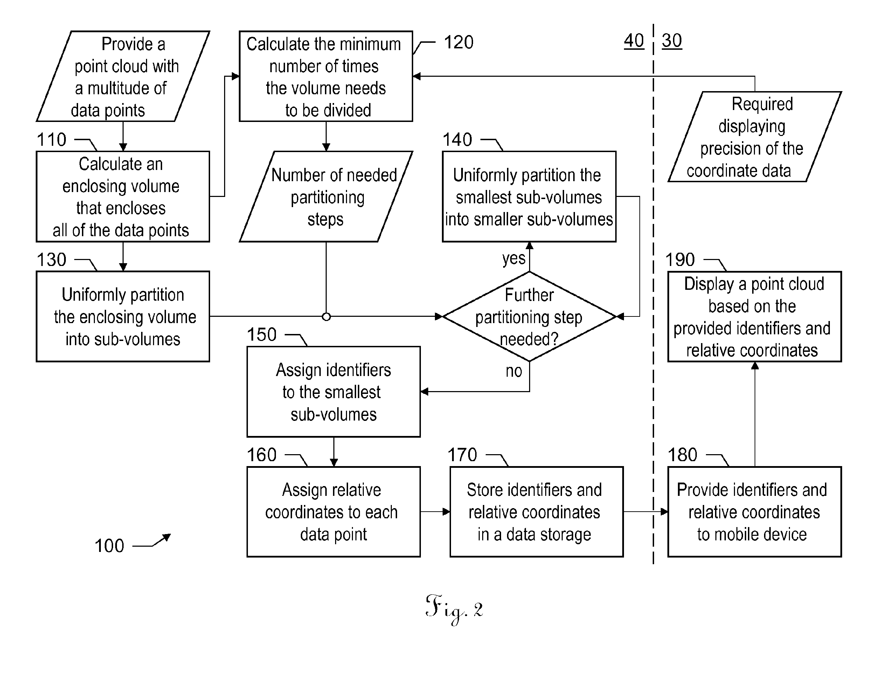

The mobile device 30 is hand-held and comprises a calculation unit (not shown) adapted for decompressing compressed data. The mobile device furthermore comprises a display 31, particularly designed as a touch-screen, being adapted for displaying a graphical representation of two-or three-dimensional coordinate data 20, particularly a point cloud. The mobile device 30 comprises input means 33 for enabling the user to change the displayed view on the graphical representation, e. g. zooming in and out, by means of a user input 90. In case of a touch-screen, the input means 33 preferably is located on the display 31. Figure 2 is a flow chart illustrating a first exemplary embodiment of a method 100 for compressing coordinate data according to the invention. The flow chart is divided into method steps that are performed by a server computer 40 (left) and by a mobile device 30 (right).

Before the method 100 can start, coordinate data needs to be provided to the server computer 40, in particular the coordinate data is a point cloud comprising a multitude of data points, each having a coordinate set. This coordinate data can be provided by a laser scanner or from external sources.

In this embodiment, the method 100 starts upon a request from the mobile device 30 to provide coordinate data for displaying.

In a first step 110 of the method 100 a data processing algorithm of the server computer 40 then calculates an enclosing volume that encloses the data points, particularly a minimum enclosing volume. This includes determining the numerical minimum and maximum values for all the coordinates in the data in each dimension. The enclosing volume can be one-, two- or three-dimensional, dependent on the dimensions of the coordinate data.

Although it is a preferred implementation for minimal loss of precision, the size of the enclosing volume does not have to be identical to the minimum and maximum values of the data.

In a next step 120 the minimum number of divisions of the enclosing volume is calculated, which is needed in order to reach a size of each sub-volume that is small enough to satisfy the needs for a required storage or displaying precision of the coordinate data in the final result.

The required displaying precision e. g. can be pre-defined, in particular through a selection by a user, or determined automatically, in particular depending on a pre-defined quality factor or on a resolution of a display on which a graphical representation of the processed point data is to be displayed. In this example, the required displaying precision depends on the resolution of a display of the requesting mobile device 30. Based on this resolution, the number of needed partitioning steps is calculated. The higher the required displaying precision, the higher is the number of needed partitioning steps.

In the next step 130, particularly running concurrently with the calculation step 120, the enclosing volume is partitioned uniformly into sub-volumes - if the enclosing volume is two-dimensional into four sub-volumes, and if the enclosing volume is three-dimensional into eight sub-volumes (2*ⁿ*).

Then it is determined whether further partitioning steps are needed, and a further partitioning step 140, in which the respective smallest sub-volumes are uniformly partitioned into 2*ⁿ* smaller sub-volumes, is repeated until the number of needed partitioning steps has been reached.

After the partitioning has been completed, in the next step 150, identifiers are provided to the smallest sub-volumes or to a subset of the smallest sub-volumes, the subset particularly comprising only to those sub-volumes that comprise at least one data point. Subsequently, in step 160 the data points are assigned relative coordinates which are referenced to the respective smallest sub-volume. The relative coordinates preferably are small integer values, where the maximum and minimum values are scaled to the size of the respective sub-volume.

The relative coordinates and the respective identifiers are then stored as processed point data for every data point in a data storage of the server computer 40 in the following step 170. Optionally, also other point-related data can be stored this way. For instance, this data can comprise a unique identifier of a data point, attributes of a data point such as a colour, or a lidar classification of the point cloud.

Particularly upon request from the mobile device 30, the processed point data is provided by the server computer 40 to the mobile device 30 in step 180. There, the processed data is received and stored. Alternatively, the method 100 may also be used in a local manner, where the data is not transferred over a network.

In a last step 190, a graphical representation of the processed point data, i.e. a compressed version of the original coordinate data, is then displayed on the display of the mobile device 30. As the compression has been adapted to the display resolution, with this embodiment of the method advantageously - at least up to a certain zoom level depending on the required displaying precision - no differences are visible to a displaying of the original data.

The precision of the compressed coordinate data can also be chosen variably by a user. It depends on
- the size of the enclosing volume chosen in step 110;
- the number of partitioning steps chosen in step 120; and
- the number of bits used for storing the relative coordinates in step 170.

If needed, the precision can also be chosen or calculated for each dimension separately.

Of course, the method need not be limited to compressing point clouds alone, but could be used for any geometry that uses coordinate points as parts of its description.

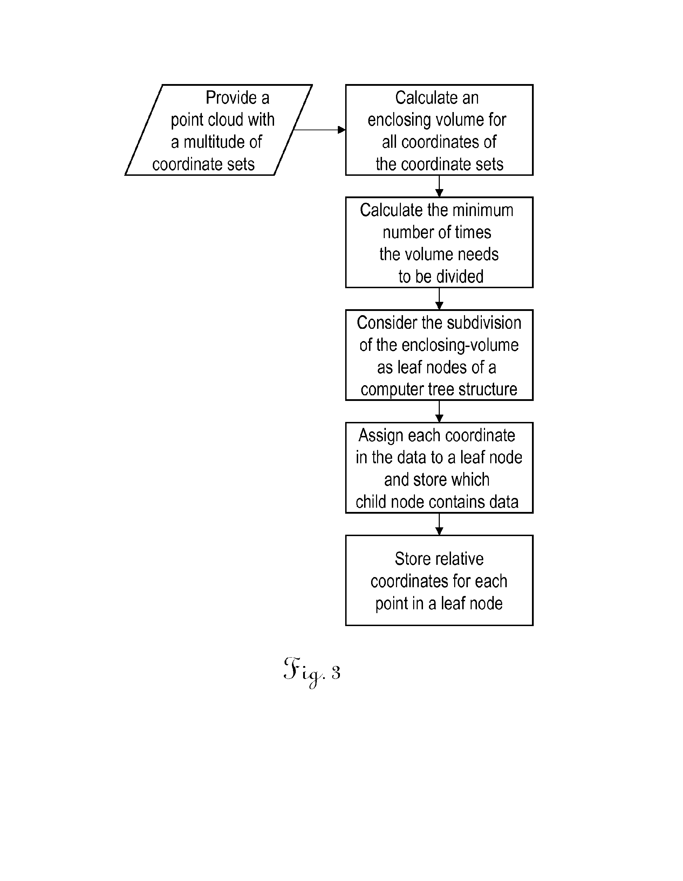

A further embodiment of the method according to the invention is illustrated in Figure 3. The method comprises the following steps:
- Calculate a volume that encloses all the coordinates in all dimensions. In its preferred form this would be described as the numerical minimum and maximum values for each dimension and for all the coordinates in the data.
- Calculate the minimum number of times this volume has to be subdivided until the size of each sub-volume reaches a size small enough to meet the need for storage precision in the final result.
- Consider the sub-volumes of the enclosing volume to be the leaf nodes of a computer tree structure where the number of children for each node in the tree equals two to the power of the number of dimensions (2*ⁿ*). This will be a quadtree for a two-dimensional space, and an octree for a three-dimensional space.
- Assign each coordinate in the data to a leaf node, so that the coordinate falls inside the corresponding sub-volume.
- Now traversing this tree from the top node and down, for each sub-tree that has at least one or more leaf nodes corresponding to a sub-volume containing data, for each step down, store which child node contains data so that the exact traversed order can be reproduced later for decompression.
- When reaching a leaf node, store the coordinates in the corresponding sub-volume, preferably storing each coordinate as a small integer value, where the maximum and minimum values are scaled to the size of the sub-volume.

The methods described above comprise a "lossy" compression. This means that some of the information will get irretrievably lost when the data is compressed. This also means that the method may have limited use when absolute precision is needed; this is however rarely the case when a point cloud is displayed on a mobile device. Also, if the points have an order in the uncompressed original data, this will get lost during the compression, because the order the points are stored in is decided by the tree traversal and not by the order in the original data.

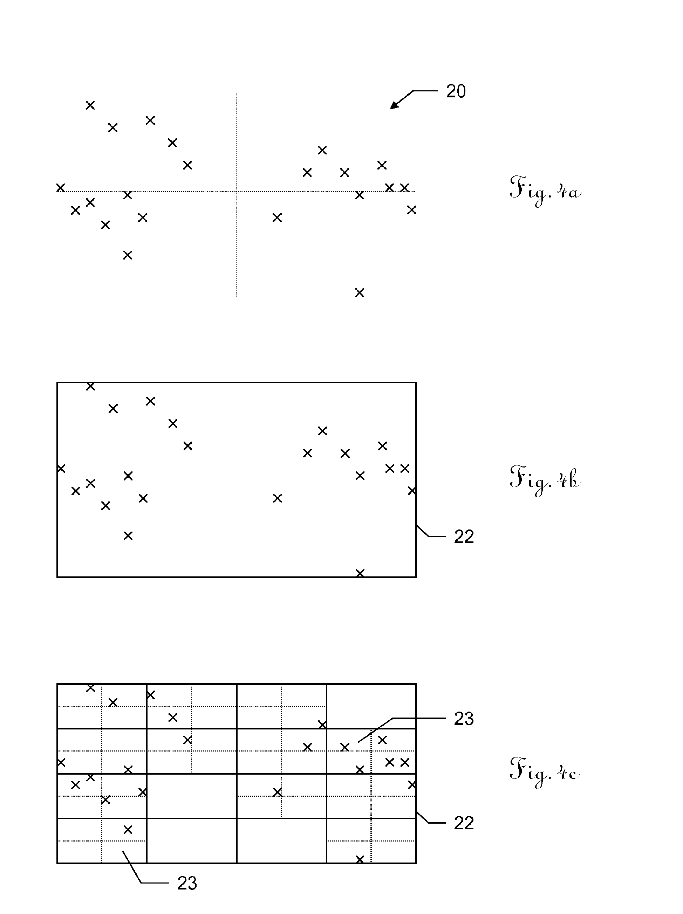

In Figures 4a-f a first embodiment of a method for compressing coordinate data 20 according to the invention is illustrated.

Figure 4a shows a number of coordinates in a two-dimensional plane as an example for coordinate data 20 that needs to be compressed.

Figure 4b shows the number of coordinates of Figure 4a together with a two-dimensional rectangular enclosing volume 22. In Figure 4c this enclosing volume 22 is shown after three partitioning steps. In the first partitioning step, the rectangle has been partitioned uniformly into four smaller rectangles. In the second partitioning step, each of the smaller rectangles that comprises at least one data point (here all four rectangles) again has been partitioned uniformly into four smaller rectangles. In the third partitioning step, each of the smaller rectangles that comprises at least one data point (here twelve rectangles) again has been partitioned uniformly into four smallest rectangles 23.

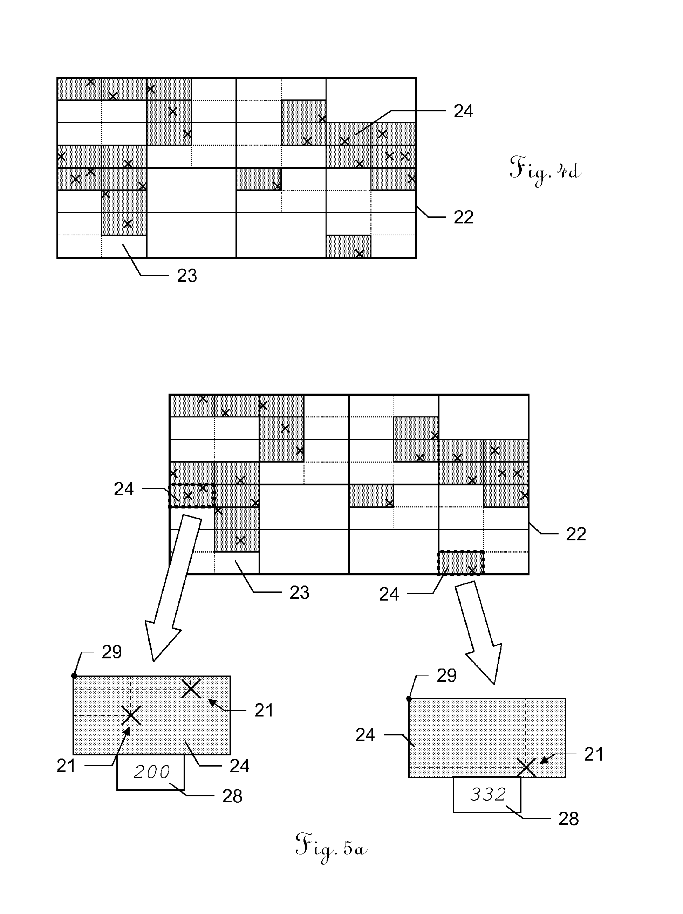

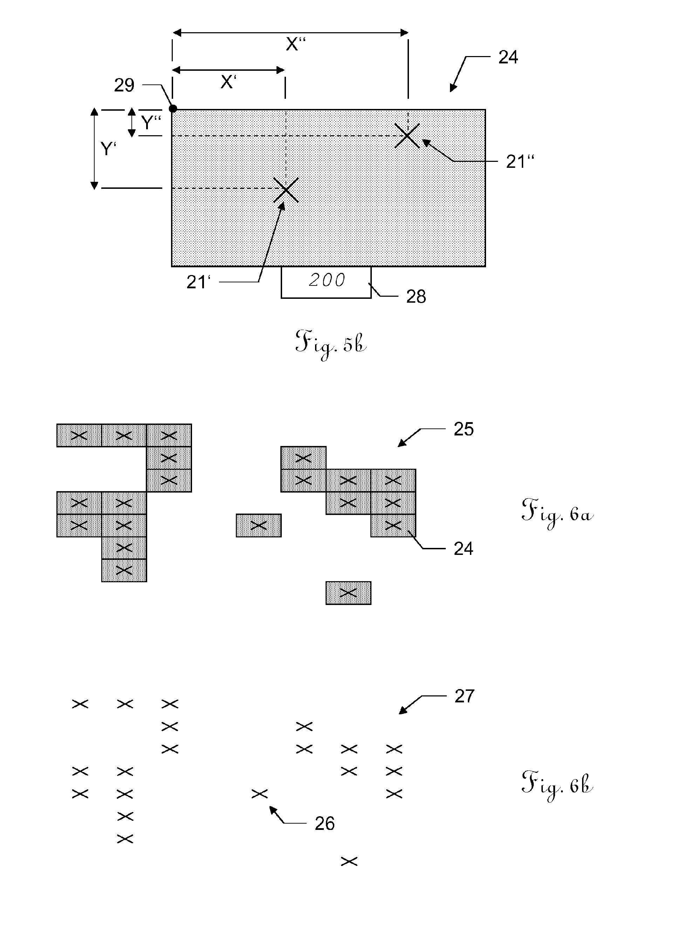

In Figure 4d, those rectangles 24 of the smallest rectangles 23 that comprise at least one data point are highlighted. Each of these rectangles 24 is assigned an unambiguous identifier, and the data points are assigned relative coordinates referenced to the respective rectangle 24. This is shown in Figures 5a-c and 6a-b.

Figures 5a-c illustrate a first exemplary way to assign the relative coordinates. Figure 5a shows the coordinate data with the partitioned enclosing volume 22 of Figure 4d wherein assigning the identifier and the relative coordinates is shown for two smallest rectangles 24 comprising data points.

On the left, a first exemplary rectangle is assigned the identifier 28 "200", and on the right, a second rectangle is assigned the identifier 28 "332". This identifier shows the position of the respective rectangle 24 in the enclosing volume 22 (as also shown in Figure 1). The number of digits in the identifier 28 depends on the number of partitioning steps, which are three in this example. As in each partitioning step, the enclosing volume 22, or the smallest sub-volumes respectively, are divided into four smaller sub-volumes, each digit can be one of four numerals, here the numerals "0", "1", "2", and "3". This means that the identifier "200" can be read as "third segment, first segment, first segment", and "332" can be read as "fourth segment, fourth segment, third segment".

Each data point 21 is then assigned a set of relative coordinates with respect to a reference point 29 of the respective rectangle 24. Here, the reference point 29 is the upper left corner of each rectangle 24.

In Figure 5b, the assigning of the relative coordinates is illustrated for the rectangle 24 with the identifier 28 "200". The first data point 21' is assigned the coordinates X' and Y' with the reference point 29 as point of origin, and the second data point 21" is assigned the coordinates X" and Y". The assigned coordinates preferably are stored as integer values scaled to the size of the rectangle 24.

Figures 6a-b illustrate a second exemplary way to assign the relative coordinates.

Figure 6a shows a subset 25 of the smallest rectangles 24 highlighted in Figure 4d, i.e. those rectangles 24 that comprise at least one data point. These are assigned identifiers 28 (as described above for Figures 5a-b).

Figure 6b shows the processed data 27 with the central points 26 of each smallest rectangle 24 of the subset 25. These central points 26 are used as relative coordinates, i.e the relative coordinates are the same for each data point. In order to achieve a comparable displaying precision, this method of course needs more partitioning steps than the method described with respect to Figures 5a-b.

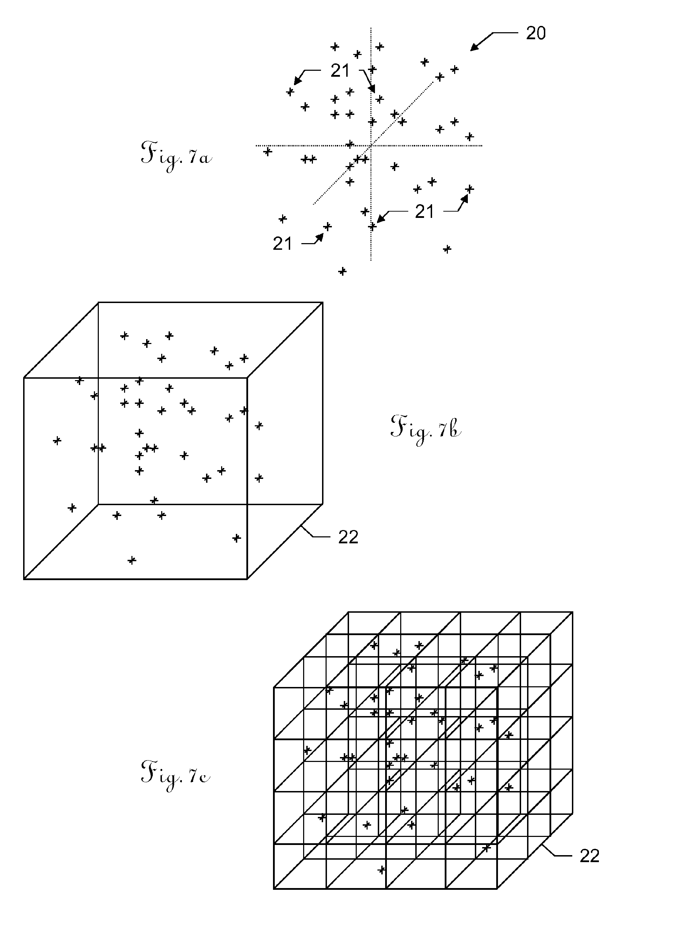

Figures 7a-c illustrate an exemplary embodiment of a method for compressing three-dimensional coordinate data.

Figure 7a shows a number of data points 21 in three-dimensional space as another example for coordinate data 20 that needs to be compressed. In Figure 7b, a three-dimensional minimum enclosing volume 22 has been calculated that encloses all of the data points 21. In Figure 7c, a number of partitioning steps has been performed on the enclosing volume 22, so that the smallest sub-volume blocks can be assigned identifiers (with numerals for 0 to 7) and the data points 21 can be assigned three-dimensional relative coordinates that are referenced to the respective block (as described above for two-dimensional data with respect to Figures 5a-b or 6a-b).

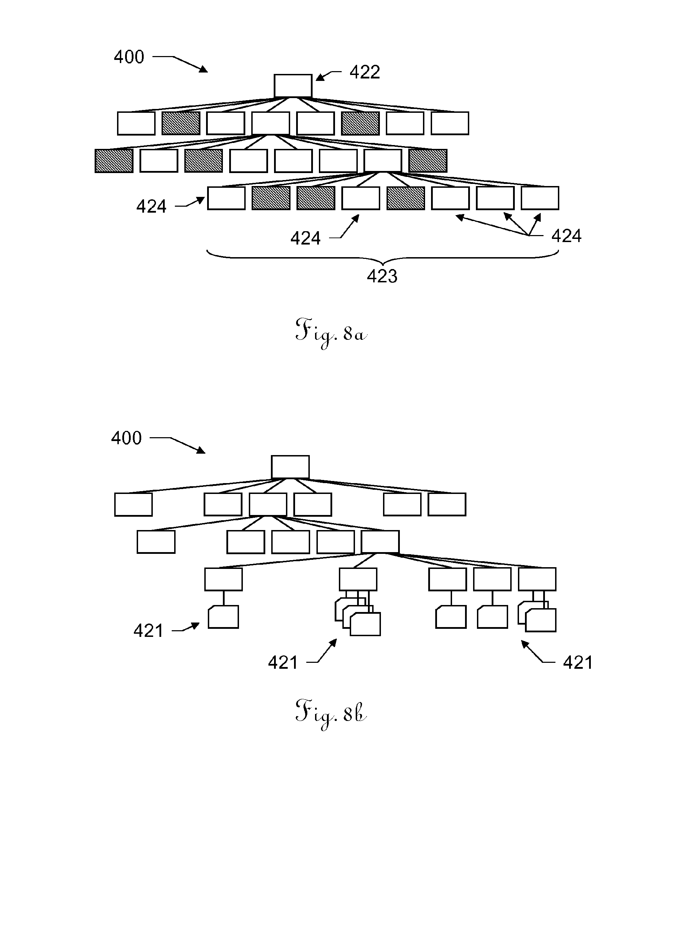

Figures 8a-b show a tree-structure 400 as an exemplary way for storing the relative data in a data storage system of a server computer 40 and for providing the data to a mobile device. Of course, the tree-structure need not actually be represented by a real data tree-structure, but instead may only be implied.

In Figure 8a an octree is shows as an example of a tree-structure 400 that can be used for a set of three-dimensional coordinates. The tree-structure 400 has a top node 422 with eight child nodes, most of which, again, having eight child nodes. These have eight child nodes, which are in this example leaf nodes 423. As this octree is used for storing processed point data comprising identifiers of smallest sub-volumes and relative point data referenced to the respective smallest sub-volume, only some of the leaf nodes 424 of the tree 400 comprise point data. The other leaf nodes 423 are crosshatched in Figure 8a. Likewise, those nodes of the tree which do not comprise leaf nodes 424 with data are also crosshatched. As they are not needed for storing data, they can be deleted.

In Figure 8b, the crosshatched nodes are left out. The remaining leaf nodes each comprise one or more sets of coordinates, i.e. relative point data 421. The leaf nodes 424 represent the smallest sub-volumes created in the last partitioning step of the above described method. They are assigned the identifiers of the respective sub-volume, here a three-digit number. The relative point data comprises a set of three-dimensional coordinates (X, Y, Z) for each data point, wherein the coordinates are referenced to a reference point of the respective sub-volume and scaled to the sub-volume's size. Preferably, the coordinates are stored as integer values.

Preferably, data is only stored in the leaf nodes of the tree and a fixed depth is used for all the branches of the tree. The tree may be implemented with a varying depth for different parts of the tree and may store data in any node.

Each sub-volume in the tree may be represented by a bit-field, e. g. comprising four bits in a quadtree (for two-dimensional data) and eight bits in an octree (for three-dimensional data), for describing the tree traversal order.

The compressed data generated by the method according to the invention also fits in a binary packed file. This provides excellent performance when decompressing the data on a device with limited resources, such as a mobile device.

Although the invention is illustrated above, partly with reference to some preferred embodiments, it must be understood that numerous modifications and combinations of different features of the embodiments can be made. All of these modifications lie within the scope of the appended claims.

## Claims

1. Method (100) for compressing a set of coordinate data (20), in particular a point cloud, comprising a multitude of data points (21), each data point (21) having a coordinate set comprising *n* coordinates, where *n* is the number of dimensions of the coordinate data (20), the method comprising
• calculating (110) an *n*-dimensional enclosing volume (22) that encloses all of the data points (21);
• uniformly partitioning the enclosing volume (22) into sub-volumes, thereby performing
□ a first partitioning step (130), in which the enclosing volume (22) is partitioned into 2*ⁿ* sub-volumes, and
□ one or more further partitioning steps (140), in each of which each of those sub-volumes that have been created in the previous partitioning step and that enclose at least one data point (21) is partitioned into 2*ⁿ* smaller sub-volumes; and
• storing (170) point data (27) of at least one data point (21) in a data storage system, wherein the point data (27) for each data point (21) comprises
□ an identifier (28) of a sub-volume that encloses the respective data point (21), and
□ relative point data of the respective data point (21), the relative point data being referenced to the respective sub-volume.

2. Method (100) according to claim 1,
**characterized by**
• providing (180) the processed point data (27) to an external device (30), particularly a mobile device, and
• displaying (190) a graphical representation of the point data (27), in particular a point cloud, on a displaying means (31) of the external device (30),
particularly wherein the number of further partitioning steps is calculated (120) based on a resolution of the displaying means (31).

3. Method (100) according to claim 1,
**characterized by**
calculating (120) the number of further partitioning steps based on a required displaying precision of the coordinate data (20), particularly wherein the required displaying precision is
• pre-defined, in particular through a selection by a user, and/or
• determined automatically, in particular depending on a pre-defined quality factor or on a resolution of a display on which a graphical representation of the point data (27) is to be displayed (190).

4. Method (100) according to any one of the preceding claims,
**characterized by**
selecting a subset (25) from the number of sub-volumes, each sub-volume (24) of the subset (25) enclosing at least one data point (21), wherein
• all data points (21) for which point data (27) is stored are enclosed in a sub-volume (24) of the subset (25) and
• the point data (27) of each data point (21) comprises an identifier (28) of a sub-volume (24) of the subset (25) and relative point data which is referenced to the respective sub-volume (24) of the subset (25),
in particular wherein the subset (25) is selected
• from those sub-volumes that have been created in a last partitioning step, and/or
• from the number of the smallest sub-volumes (23), in particular wherein selecting the subset (25) from the number of the smallest sub-volumes (23) comprises selecting exactly those sub-volumes (24) that enclose at least one data point (21).

5. Method (100) according to claim 4,
**characterized in that**
storing (170) point data (27)
• is performed for a multitude of sub-volumes (24) of the subset (25), in particular for every sub-volume (24) of the subset (25);
• comprises storing point data of at least one data point (21) that is enclosed by the respective sub-volume (24), in particular of all data points (21) that are enclosed by the respective sub-volume (24); and/or
• comprises storing further information about the data point (21), particularly a unique identifier, a colour, or a lidar classification.

6. Method (100) according to claim 4 or claim 5,
**characterized in that**
• a reference point (29) is defined for each sub-volume (24) of the subset (25), wherein the reference points (29) have the same coordinates in their respective sub-volume (24), particularly being centre or corner points of their respective sub-volumes (24), and
• the relative point data of the respective data point (21) is referenced to the reference point (29).

7. Method (100) according to any one the claims 4 to 6,
**characterized in that**
• uniformly partitioning the enclosing volume (22) comprises assigning nodes of a data tree-structure (400) to the sub-volumes, wherein a number of children for each node in the tree equals 2*ⁿ*;
• selecting a subset (25) comprises assigning leaf nodes (424) to the smallest sub-volumes (24) enclosing at least one data point (21); and
• storing point data (27) comprises
□ determining for each data point (21) which leaf node (424) it belongs to; and
□ traversing the tree structure (400) downwards from a top node (422) along each sub-tree that has at least one leaf node (424), wherein when reaching a leaf node (424), coordinates relative to the corresponding sub-volume (24) are stored,
in particular wherein for each step down, it is stored which child node contains data so that the traversed order is reproducible for decompression.

8. Method (100) according to any one of the preceding claims,
**characterized in that**
maximum and minimum values of the coordinates of the relative point data that is referenced to a sub-volume are scaled to the size of the respective sub-volume, particularly wherein the coordinates are stored as integer values.

9. Method (100) according to any one of the preceding claims,
**characterized in that**
• the enclosing volume (22) is a minimum enclosing volume, and/or
• calculating the enclosing volume (22) comprises determining for all the coordinates in the coordinate data (20) the numerical minimum and maximum values for each dimension.

10. Server computer (40) adapted for processing coordinate data (20) comprising a multitude of data points (21), each data point (21) having a coordinate set comprising n coordinates, where n is the number of dimensions of the coordinate data (20), the server computer (40) comprising
• a calculation unit adapted for generating point data (27) from the coordinate data (20);
• a data storage system adapted for storing (170) the point data (27) in a tree structure (400); and
• provision means adapted for providing (180) the point data (27) to a mobile device (30), particularly via an internet or intranet connection (70) and/or a public or private cloud,
**characterized in that**
the calculation unit comprises a data processing algorithm adapted for performing a data compressing process for generating the point data (27) from the coordinate data (20), wherein the data compressing process comprises
• calculating (110) an *n*-dimensional enclosing volume (22) that encloses all of the data points (21);
• uniformly partitioning the enclosing volume (22) into sub-volumes, thereby performing
□ a first partitioning step (130), in which the enclosing volume (22) is partitioned into 2*ⁿ* sub-volumes, and
□ one or more further partitioning steps (140), in each of which each of those sub-volumes that have been created in the previous partitioning step and that enclose at least one data point (21) is partitioned into 2*ⁿ* smaller sub-volumes; and
• storing (180) point data (27) of at least one data point (21) in the data storage system, wherein the point data (27) for each data point (21) comprises
□ an identifier (28) of a sub-volume that encloses the respective data point (21), and
□ relative point data of the respective data point (21), the relative point data being referenced to the respective sub-volume.

11. Server computer (40) according to claim 10,
**characterized in that**
the data compressing process comprises selecting a subset (25) from the number of sub-volumes, each sub-volume (24) of the subset (25) enclosing at least one data point (21), wherein
• all data points (21) for which point data (27) is stored are enclosed in a sub-volume (24) of the subset (25) and
• the point data (27) of each data point (21) comprises an identifier (28) of a sub-volume (24) of the subset (25) and relative point data which is referenced to the respective sub-volume (24) of the subset (25).

12. Server computer (40) according to claim 11,
**characterized in that**
the number of further partitioning steps depends on a needed displaying precision of the coordinate data (20),
particularly wherein the needed displaying precision is
• subject to a resolution of a displaying means (31) of the external device (30),
• pre-defined, in particular through a selection by a user, and/or
• determined automatically, in particular depending on a pre-defined quality factor.

13. Server computer (40) according to claim 11 or claim 12,
**characterized in that**
• uniformly partitioning the enclosing volume (22) comprises assigning nodes of the data tree-structure (400) to the sub-volumes, wherein a number of children for each node in the tree equals 2*ⁿ*;
• selecting a subset (25) comprises assigning leaf nodes (424) to the smallest sub-volumes (24) enclosing at least one data point (21); and
• storing compressed data comprises
□ determining for each data point (21) which leaf node (424) it belongs to; and
□ traversing the tree structure (400) downwards from a top node (422) along each sub-tree that has at least one leaf node (424), wherein when reaching a leaf node (424), coordinates relative to the corresponding sub-volume (24) are stored,
in particular wherein for each step down, it is stored which child node contains data so that the traversed order is reproducible for decompression.

14. Computer system comprising a server computer (40) and a mobile device (30), the system being adapted for processing and displaying coordinate data (20) comprising a multitude of data points (21), each data point (21) having a coordinate set comprising n coordinates, where n is the number of dimensions of the coordinate data (20),
• the server computer (40) comprising
□ a calculation unit adapted for generating point data (27) from the coordinate data (20);
□ a data storage system adapted for storing (170) the point data (27) in a tree structure (400); and
□ provision means adapted for providing (180) the point data (27) to the mobile device (30), particularly via an internet or intranet connection (70) and/or a public or private cloud,
• the mobile device (30) comprising a displaying means (31) adapted for displaying (190) a graphical representation of the point data (27), in particular a point cloud,
**characterized in that**
the calculation unit comprises a data processing algorithm adapted for performing a data compressing process for generating the point data (27) from the coordinate data (20), wherein the data compressing process comprises
• calculating (110) an *n*-dimensional enclosing volume (22) that encloses all of the data points (21);
• uniformly partitioning the enclosing volume (22) into sub-volumes, thereby performing
□ a first partitioning step (130), in which the enclosing volume (22) is partitioned into 2*ⁿ* sub-volumes, and
□ one or more further partitioning steps (140), in each of which each of those sub-volumes that have been created in the previous partitioning step and that enclose at least one data point (21) is partitioned into 2*ⁿ* smaller sub-volumes, wherein the number of further partitioning steps depends on a resolution of the displaying means (31); and
• storing (170) point data (27) of at least one data point (21) in the data storage system, wherein the point data (27) for each data point (21) comprises
□ an identifier (28) of a sub-volume that encloses the respective data point (21), and
□ relative point data of the respective data point (21), the relative point data being referenced to the respective sub-volume.

15. Computer programme product, comprising programme code which is stored on a machine-readable medium, or being embodied by an electromagnetic wave comprising a programme code segment, and having computer-executable instructions for performing, in particular when run on calculation means of a computer system (40) according to any one of claims 11 to 14, the following steps of the method according to any one of the claims 1 to 10:
• calculating (110) an *n*-dimensional enclosing volume (22) that encloses all of the data points (21);
• uniformly partitioning the enclosing volume (22) into sub-volumes, thereby performing
□ a first partitioning step (130), in which the enclosing volume (22) is partitioned into 2*ⁿ* sub-volumes, and
□ one or more further partitioning steps (140), in each of which each of those sub-volumes that have been created in the previous partitioning step and that enclose at least one data point (21) is partitioned into 2*ⁿ* smaller sub-volumes; and
• storing (170) point data (27) of at least one data point (21) in a data storage system, wherein the point data (27) for each data point (21) comprises
□ an identifier (28) of a sub-volume that encloses the respective data point (21), and
□ relative point data of the respective data point (21), the relative point data being referenced to the respective sub-volume.
